# EUROPEAN PATENT APPLICATION

(11) **EP 4 572 058 A1**
(43) Date of publication of application: **18.06.2025**
(21) Application number: 24218413.3
(22) Date of filing: 09.12.2024
(51) Int. Cl.: H02J 1/14, H01S 3/09

(54) **FIBER OPTIC CABLE POWER IN REPEATERED SYSTEMS**

(30) Priority: 11.12.2023 US 202363608519 P
(71) Applicant: SubCom, LLC, Eatontown, NJ 07724 (US)
(72) Inventor: Fishman, David, Eatontown, 07724 (US); Pappas, Dean, Eatontown, 07724 (US)
(74) Representative: Arnold & Siedsma

(57) **Abstract**

An optical pump unit may include a line voltage transistor, coupled between an input side and an output side of the optical pump unit. The optical pump may further include a DC-to-DC converter, having an input side coupled to the line voltage transistor; an optical pump assembly, coupled to an output side of the DC-to-DC converter; a current control assembly, coupled to the optical pump assembly; a throttle back control assembly, having an output coupled to the current control assembly, and a current/voltage sensor, to monitor a line current and voltage drop in the optical repeater, and being coupled to an input of the throttle back control assembly. As such, the throttle back control assembly may be configured to send a signal to the current control assembly to reduce a power at the optical pump assembly when a decrease in line current or voltage drop takes place.

## Description

### Related Applications

This application claims priority to U.S. provisional patent application serial number 63/608,519, entitled FIBER OPTIC CABLE POWER IN REPEATERED SYSTEMS, filed December 11, 2023.

### Background

### Field

The present disclosure relates to the field of optical communication systems. In particular, the present disclosure relates to architecture in subsea repeaters for improving power usage in repeatered subsea communications system.

### Discussion of Related Art

Long-haul optical communication systems, such as subsea optical communication systems, may include numerous interconnected optical cables to facilitate the communication of data and information. For transmission over long distances, such as hundreds of kilometers or thousands of kilometers, optical communications systems are provided with installations called repeaters. The repeaters may be placed at intervals of 50 km, 100 km, and so forth, and include components to amplify the optical signal. Power may be provided to optical communications components, including repeaters, via electrical wires or cables that may transmit DC current at high voltage along the subsea communications route.

In particular, at a given repeater an optical pump unit (OPU) is powered to generate an amplification of the optical signal being transmitted through the optical cable. The optical pump unit may control operation of Erbium doped fiber amplifiers (EDFAs) that are used to amplify optical signals being transmitted through a given repeater. An optical pump unit includes circuitry that is used to control operation of the pump lasers that are used in the EDFA to provide optical amplification.

An ongoing issue with regard to optical repeaters is the need to efficiently provide power to the EDFAs, particularly in long haul systems that may include dozens of repeaters across a cable span.

It is with reference to these, and other considerations, that the present disclosure is provided.

### Brief Summary

An optical pump unit for an optical repeater is provided. The optical pump unit may include a line voltage transistor, coupled between an input side and an output side of the optical pump unit. The optical pump unit may further include a DC-to-DC converter, having an input side coupled to the line voltage transistor, an optical pump assembly, coupled to an output side of the DC-to-DC converter, and a current control assembly, coupled to the optical pump assembly. The optical pump unit may further include a throttle back control assembly, having an output coupled to the current control assembly, and a current/voltage sensor, to monitor a line current and voltage drop in the optical repeater, and being coupled to an input of the throttle back control assembly. As such, the throttle back control assembly may be configured to send a signal to the current control assembly to reduce a power at the optical pump assembly when a decrease in line current or voltage drop takes place.

A system for subsea optical communications is provided. The system may include a station, to launch an optical signal over a signal path, a plurality of optical repeaters, to amplify the optical signal along the signal path, and a cable to conduct the optical signal along the signal path, the cable comprising an electrical conductor to conduct power to the plurality of optical repeaters. As such, a given optical repeater of the plurality of optical repeaters may include an erbium doped fiber and an optical pump unit. The optical pump unit may include a line voltage transistor, coupled between an input side and an output side of the optical pump unit, a DC-to-DC converter, having an input side coupled to the line voltage transistor, and an optical pump assembly, coupled to an output side of the DC-to-DC converter. The optical pump unit may further include a current control assembly, coupled to the optical pump assembly, a throttle back control assembly, having an output coupled to the current control assembly, and a current and voltage sensor, to monitor a line current and repeater voltage drop in the optical repeater, and being coupled to an input of the throttle back control assembly. As such, the throttle back control assembly may be configured to send a signal to the current control assembly to reduce a power at the optical pump assembly when a decrease in line current or repeater voltage drop takes place.

### Brief Description of the Drawings

FIG. 1 illustrates a block diagram of subsea optical communications system, arranged in accordance with the disclosure; and
FIG. 2 illustrates a block diagram of an optical pump unit, arranged in accordance with the disclosure; and
FIG. 3 presents a schematic circuit arrangement for an optical pump unit, arranged in accordance with the disclosure.

### Description of Embodiments

The disclosure will now be described more fully hereinafter with reference to the accompanying drawing figures.. In the drawings, like numbers refer to like elements throughout.

The disclosure provides architecture and components of a subsea communications system, more specifically, architecture of repeater optical pump units that control operation of EDFAs used to amplify optical signals being transmitted through optical cables of the subsea communications system.

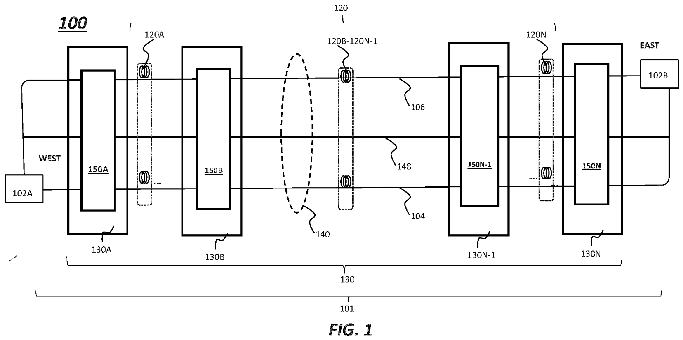

FIG. 1 illustrates a block diagram of subsea optical communications system, shown as system 100, arranged in accordance with the disclosure. The system 100 may be arranged for bidirectional communications and may include terrestrial based installations that are used for generating and directing optical communications signals, receiving optical communications signals, providing electrical power to operate components of the system 100, and other functions as known in the art. In the illustration of FIG. 1, a station 102A is shown, and a station 102B is shown, which stations may represent terrestrial installations that are located at opposite ends of a subsea system. In some examples, the system 100 may span a system length 101 1000 km, 5000 km, or up to 10000 km or more, between the station 102A and the station 102B, and may be divided into a plurality of spans 120, shown as span 120A, span 120B, ... span 120N-1, and span 120N. Note that in a system having a length of 10000 km, where a span length may be approximately 100 km, the system 100 may include dozens of spans. The link between station 102A and 102B is spanned by an optical communications cable 140, which cable may conduct optical signals along a signal path 104 from west to east that are transmitted from station 102A, where "west" and "east" are used merely to denote opposite ends of the system 100. Likewise, cable 140 may conduct optical signals along a signal path 106 from east to west that are transmitted from station 102B. While not shown separately, a plurality of optical fibers will be included in the cable 140 to provide the conductive paths for transmitting optical signals between station 102A and station 102B. The cable 140 may include an electrical conductor 148, such as a copper wire, for providing power to components along the system 100, including power to a plurality of optical repeaters. The optical repeaters are individually represented in FIG. 1 as repeater 130A, repeater 130B, repeater 130N-1, and repeater 130N, where the total number N of repeaters may number in the dozens. In a given repeater, power is needed to drive optical pump units that amplify optical signals being conducted along the system 100. The system voltage that is required to operate all the components of system 100 is determined primarily from a sum of the voltage drop along the length of the cable 140 due to the cable 140 itself and the total voltage drop across all the repeaters 130. In some examples, this system voltage may be in the range of 20 kV or more.

As further illustrated in FIG. 1, an optical pump unit may be included in a given repeater, where the optical pump units (OPU) are individually labeled as OPU 150A, OPU 150B, OPU 150N-1, and OPU 150N. Each of these OPUs may include optical pumps (not separately shown) that are based upon semiconductor lasers, where the given OPU provides circuitry to more efficiently manage power that is required to drive the optical pumps and related circuitry. One or more of the OPUs as shown in FIG. 1, such as each of the OPUs, may have an architecture, , where circuitry and components are provided to more efficiently manage power used by a given repeater.

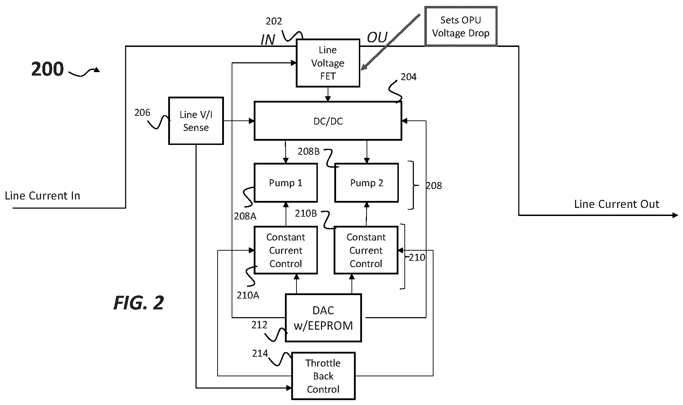

FIG. 2 illustrates a block diagram of an optical pump unit, arranged in accordance with the disclosure. The optical pump unit 200, or OPU 200, may be considered a variant of OPUs 150. The OPU 200 may include a line voltage transistor 202, coupled between an input side IN and an output OU side of the OPU 200. The line voltage transistor 202 may set the voltage drop of the OPU 200. The optical pump unit 200 may further include a DC-to-DC converter 204, having an input side coupled to the line voltage transistor 202, and an optical pump assembly 208 coupled to an output side of the DC-to-DC converter 204. The optical pump assembly 208 may include a pair of optical pumps (or more than two optical pumps in some variants), shown as optical pump 208A and optical pump 208B. The optical pump assembly 208 may provide a pair of optical pumps to provide redundancy in a given repeater. In addition, the OPU 200 may include a current control assembly 210, coupled to the optical pump assembly 208. In the example shown, the current control assembly 210 may include a current controller 210A, and current controller 210B, coupled to optical pump 208A and optical pump 208B, respectively. The OPU 200 may further include a throttle back control assembly 214, having an output coupled to the current control assembly 210.

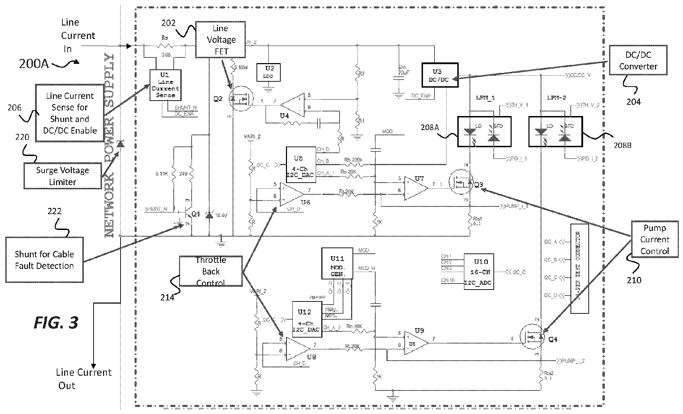

As further shown in FIG. 2, the OPU 200 may include a DAC 212 and line current/voltage sensor 206. The voltages of line voltage transistor 202 and DC-to-DC converter 204 are optimized to reduce power consumption in the OPU 200, as detailed below with respect to FIG.3. Moreover, the circuitry of OPU 200 is arranged such that pump power is maintained at the nominal line current and above. The line current/voltage sensor 206 may be arranged to monitor a line current and repeater voltage drop in an optical repeater (see repeaters 130), and is coupled to an input of the throttle back control assembly 214, wherein the throttle back control assembly 214 is configured to send a signal to the current control assembly 210 to reduce a power at the optical pump assembly 208 when a decrease in line current takes place. As such, when the line current or repeater voltage drops, power is then throttled back to prevent voltage collapse of the OPU 200.

FIG. 3 presents a schematic circuit arrangement for an optical pump unit 200A, arranged in accordance with the disclosure. The OPU 200A may be deemed a variant of the OPU 200, described above. The line voltage transistor 202 is embodied as a field effect transistor, and each of optical pump 208A and optical pump 208B is embodied as a pair of laser diodes that provide bidirectional optical pumping, for amplifying signals transmitted on signal path 104 or signal path 106.

The current control assembly 210 can be formed of a pair of current control transistors labeled as Q3 and Q4, wherein a first current control transistor (Q3) is connected to a first optical pump (optical pump 208A) of the optical pump assembly 208, and a second current control transistor (Q4) is separately connected to a second optical pump (optical pump 208B) of the optical pump assembly 208. The throttle back control assembly 214 of optical pump unit 150A may include a pair of comparison circuits, wherein a first comparison circuit (U6 and U7) is connected to the first current control transistor (Q3), and a second current control circuit (U8 and U9) is separately connected to the second current control transistor (Q4).

As further depicted in FIG. 3 the optical pump unit 200A may include a surge voltage diode 220, coupled between the input side and output side of an optical repeater that includes the OPU 200A. The optical pump unit 200A may further include a shunt voltage circuit 222, coupled between the input side and an output side of the optical repeater.

Some overall advantages is that there is provided adjustability in the voltage drop. Note that subsea optical communications may generally be designed to accommodate the worst-case fiber pair in the system, causing the total system voltage to be unduly large. The provision of the line voltage transistor 202 allows the repeater voltage drop to be much less than in prior art systems, leading to potentially large power savings.

### Experimental Data

Simulations of subsea optical communication systems were conducted for a 10,000 km length cable, having 144 bidirectional repeaters to determine values for various operating parameters. For a known system having repeaters arranged with known OPUs, the simulated nominal line current value was 0.783 A, with a repeater voltage drop of 60.8 V, a total system voltage of 20.5 kV, and a total system power of 16.0 kW. For a system arranged with a set of OPUs of the disclosure the nominal line current was 0.625, and an average repeater voltage drop of 51.1. V, total system voltage of 17.0 kV, and total system power of 10.6 kW. Thus, the system having OPUs 150, 200 may require substantially lower system voltage, and may save 34% power in this one non-limiting example.

## Claims

1. An optical pump unit, for an optical repeater, comprising:
a line voltage transistor, coupled between an input side and an output side of the optical pump unit;
a DC-to-DC converter, having an input side coupled to the line voltage transistor;
an optical pump assembly, coupled to an output side of the DC-to-DC converter;
a current control assembly, coupled to the optical pump assembly;
a throttle back control assembly, having an output coupled to the current control assembly; and
a current/voltage sensor, to monitor a line current and voltage drop in the optical repeater,
and being coupled to an input of the throttle back control assembly, wherein the throttle back control assembly is configured to send a signal to the current control assembly to reduce a power at the optical pump assembly when a decrease in line current or voltage drop takes place.

2. The optical pump unit of claim 1, wherein the optical pump assembly comprises at least two optical pumps, wherein each optical pump of the at least two optical pumps is arranged as a bidirectional optical pump.

3. The optical pump unit of claim 2, wherein the current control assembly comprises a pair of current control transistors, wherein a first current control transistor is connected to a first optical pump of the optical pump assembly, and a second current control transistor is separately connected to a second optical pump of the optical pump assembly.

4. The optical pump unit of claim 3, wherein the throttle back control assembly comprises a pair of comparison circuits, wherein a first comparison circuit is connected to the first current control transistor, and a second current control circuit is separately connected to the second current control transistor.

5. The optical pump unit of any of the preceding claims, further comprising surge voltage diode, coupled between an input side and an output side of the optical repeater.

6. The optical pump unit of any of the preceding claims, further comprising a shunt voltage circuit, coupled between an input side and an output side of the optical repeater.

7. A system, for subsea optical communications, comprising:
a station, to launch an optical signal over a signal path;
a plurality of optical repeaters, to amplify the optical signal along the signal path;
a cable to conduct the optical signal along the signal path, the cable comprising an electrical conductor to conduct power to the plurality of optical repeaters, wherein a given optical repeater of the plurality of optical repeaters comprises:
an erbium doped fiber; and
an optical pump unit according to any of the preceding claims.

8. Use of an optical pump according to any of the claims 1-7 in a sub-sea communication.

9. Method for communicating sub-sea using a system according to claim 7.
